# EUROPÄISCHE PATENTSCHRIFT

(11) **EP 0 627 291 B1**
(45) Veröffentlichungstag und Bekanntmachung des Hinweises auf die Patenterteilung: **04.03.1998**
(21) Anmeldenummer: 94106820.7
(22) Anmeldetag: 02.05.1994
(51) Int. Cl.: B29C 45/17

(54) **Bedieneinheit für eine Spritzgiessmaschine**
Control unit for an injection moulding machine
Unité de commande pour une machine à mouler par injection

(30) Priorität: 12.05.1993 DE 4315902
(43) Veröffentlichungstag der Anmeldung: 07.12.1994
(73) Patentinhaber: DR. BOY GmbH, D-53577 Neustadt (DE)
(72) Erfinder: Schiffer, Alfred, D-53577 Neustadt (DE)
(74) Vertreter: Hosbach, Hans Ulrich

(56) Entgegenhaltungen:
- EP-A- 0 336 249
- EP-A- 0 371 642
- EP-A- 0 382 232
- US-A- 4 294 496

## Beschreibung

Die Erfindung bezieht sich auf eine Bedieneinheit für eine Spritzgießmaschine.

Bei modernen Spritzgießmaschinen sind die Spritzgießbedingungen und der Funktionsablauf der Maschine computergesteuert. Bei Änderung der unter Massenproduktionsbedingungen hergestellten Formteile ist eine neue Einrichtung und das Abspeichern von Daten und Parametern für den Produktionsprozeß erforderlich. Dies geschieht in der Regel über ein gesondertes Tastenfeld. Eingriffe in den Produktionsablauf werden dagegen über wenigstens ein weiteres Funktionstastenfeld durchgeführt.

Als Display- bzw. Anzeigegerät bietet sich bei computergesteuerten Spritzgießmaschinen ein Bildschirm nach Art eines Monitors, beispielsweise ein Flüssigkristall- oder Plasma-Bildschirm, an. Auf diesem können die bei der Dateneingabe während des Einrichtens eingegebenen Daten, Kontrollmeldungen und sogar eine volle Menüführung zur Anzeige gebracht werden. Der Einsatz eines Bildschirms ist jedoch unter den relativ rauhen Produktionsbedingungen im betrieblichen Einsatz einer Spritzgießmaschine nicht ohne Probleme möglich. Der Bildschirm hat eine große Angriffsfläche und ist im Schirmbereich besonders stoßempfindlich. Beschädigungen des Bildschirms bergen zudem ein zusätzliches Personengefahrenrisiko.

Von der Anmelderin durchgeführte Untersuchungen haben gezeigt, daß mechanische Beschädigungen der empfindlichen Bildschirmfrontseite bei der Betätigung der Bedieneinheit und bei der Informationsgewinnung über den Bildschirm - wenn überhaupt - nur selten auftreten. Die Bedienungsperson ist bei der Eingabe und Informationsgewinnung auf die Bildschirmbeobachtung konzentriert. Diese grundsätzlich schonende Behandlung des empfindlichen Bildschirms geht folglich mit denjenigen Zeiten konform, bei denen der Bildschirm seinen größten Nutzen entfaltet; das ist bei der Dateneingabe während des Einrichtens des Funktionsprozesses der Spritzgießmaschine. Während des zumeist automatischen Produktionsablaufs der Maschine werden dagegen wenige aktuelle Informationen benötigt und angezeigt. Während dieser wesentlich ausgedehnteren und häufigeren Phasen ist die Wahrscheinlichkeit von mechanischen Beanspruchungen der Bedieneinheit durch unkontrollierte Stöße oder Bewegungen des Bedienungspersonals mit Abstand am höchsten.

Aus der EP-A-0 336 249 ist eine Spritzgießmaschine bekannt, an deren Rahmen ein Bildschirm mit einer darunter befindlichen Dateneingabetastatur angeordnet ist. Im Abstand hierzu weist die Spritzgießmaschine ein ebenfalls fest angeordnetes Funktionstastenfeld auf. Abgesehen davon, daß diese Bauelemente nicht zu einer Bedieneinheit zusammengefaßt sind, unterliegen Bildschirm und Benutzer der vorstehend geschilderten Gefährdung.

Der Erfindung liegt die Aufgabe zugrunde, den hohen Bedienungs- und Informationskomfort eines Bildschirms für die Bedieneinheit von Spritzgießmaschinen nutzbar zu machen, ohne Bedienungspersonal und Bedieneinheit erhöhten Verletzungs- oder Beschädigungsgefahren auszusetzen.

Zur Lösung dieser Aufgabe ist die Bedieneinheit der eingangsgenannten Art erfindungsgemäß mit einer Tastatur zur Dateneingabe, Funktionstastenfeldern zur Steuerung des Funktionsablaufs der Maschine und mit einem Bildschirm versehen; wobei die Tastatur an einer im Bereich unterhalb des Bildschirms schwenkbar gelagerten Klappe befestigt und in unbenutztem Zustand auf den Bildschirm derart umklappbar ist, daß die Klappe und/oder Tastatur mindestens den unteren Bereich des Bildschirms schützend abdeckt; und wobei wenigstens auf einer Seite des Bildschirms ein Funktiontastenfeld in fester Zuordnung zum Bildschirm derart angeordnet ist, daß die Funktionstasten auch bei abgedecktem Bildschirm frei zugänglich und betätigbar sind.

Die erfindungsgemäße Bedieneinheit stellt dem Bedienungspersonal der Spritzgießmaschine zumindest für die Dateneingabe und -kontrolle während des Einrichtens und des Abspeicherns die dafür optimale Bildschirmanzeige zur Verfügung. Über den Computer kann am Bildschirm einerseits die Bestätigung über alle eingestellten Funktionsvorgänge und andererseits eine bedienungsfreundliche Menüführung sichtbar gemacht werden. Die ganze Bedieneinheit, also einschließlich des vor mechanischen Beschädigungen zu schützenden Bildschirms, kann der Spritzgießmaschine an einer ergonomisch günstigen Position fest zugeordnet werden. Während des unbenutzten Zustandes wird die die Tastatur tragende Klappe einfach gegen den Bildschirm umgelegt; denn sie wird im darauffolgenden (weitgehend automatischen) Produktionsablauf nicht gebraucht. Die die Tastatur tragende Klappe kann ohne wesentlichen Aufwand aus einem die notwendige Schutzfunktion erfüllenden Material und in entsprechender Form ausgebildet werden. Häufig genügt es, den Bildschirm nur teilweise, nämlich im unteren Bereich, durch die Klappe abzudecken. Dort ist der Bildschirm besonders häufig mechanischen Beschädigungen durch eine Fehlbedienung von Werkzeugen und Instrumenten ausgesetzt. Zudem gibt ein offener Schlitz entlang des oberen Randes des Bildschirms die Möglichkeit, aktuelle Produktionsvorgänge sichtbar zu machen.

Ein noch weiter verbesserter Schutz gegen mechanische Beschädigungen läßt sich in Weiterbildung der Erfindung dadurch erreichen, daß im oberen Bereich des Bildschirms eine zweite Schutzklappe schwenkbar angeordnet ist, wobei die Schwenkachsen beider Klappen zueinander parallel verlaufen, und daß die beiden Klappen in ihrer auf den Bildschirm geklappten Stellung den Bildschirm im wesentlichen vollständig abdecken.

Diese zweite Klappe eignet sich vorzüglich als Blendschutzklappe bei der Bedienung des Bildschirms und ist zu diesem Zweck in verschiedenen Schwenkstellungen einstellbar, um Lichteinstrahlungen in Anpassung an die örtlichen Verhältnisse abzuschatten.

Der Ausbildung und Anordnung der Funktionstastenfelder zur Steuerung des Funktionsablaufs der Maschine sind durch die Erfindung keine Grenzen gesetzt. Die Funktionstastenfelder können herkömmlich ausgebildet und angeordnet sein. Sie können in Anpassung an die erfindungsgemäße Bedieneinheit symmetrisch zu beiden Seiten des Schirms angeordnet sein. Aus ergonomischen Gründen ist es häufig zweckmäßig, wenn gemäß Weiterbildung der Erfindung die beiden Bedienfelder gegenüber den eingeklappten ersten und/oder zweiten Klappen zur Frontseite hin vorspringen.

Im folgenden wird die Erfindung anhand eines in der Zeichnung schematisch dargestellten Ausführungsbeispiels näher erläutert. In der Zeichnung zeigen:
- Fig. 1: eine Frontansicht auf ein Ausführungsbeispiel der neuen Bedieneinheit in der zur Dateneingabe geeigneten Position;
- Fig. 2: eine Seitenansicht der Bedieneinheit gemäß Fig. 1; und
- Fig. 3: eine teilweise geschnittene, gegenüber Fig. 2 vergrößerte Seitenansicht der Bedieneinheit in einer den Bildschirm vor mechanischen Beschädigungen schützenden Position.

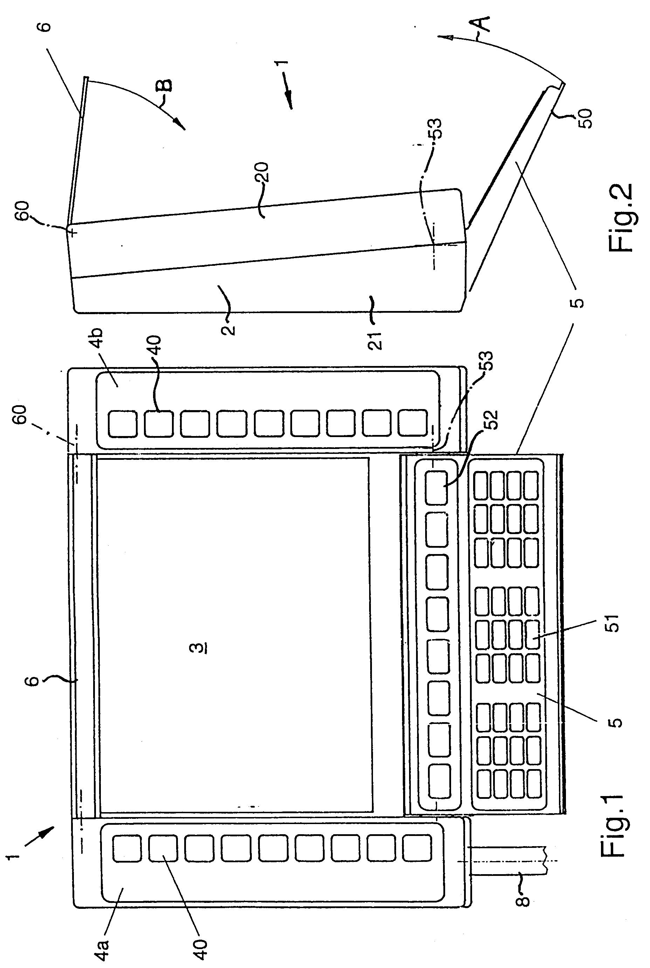

Die in Fig. 1 und 2 in Front- und Seitenansichten dargestellte Bedieneinheit 1 weist ein in fester räumlicher Zuordnung am nicht dargestellten Gestell einer Spritzgießmaschine angebrachtes Gehäuse 2 mit einem Frontgehäuseteil 20 und einem hinteren Gehäuseteil 21 auf. In dem Gehäuse 2 sind ähnlich einem intelligenten Terminal Komponenten einer Datenverarbeitungseinrichtung und geeignete Speicher eingebaut, auf die es im Rahmen der vorliegenden Erfindung aber nicht ankommt. Der frontseitige Gehäuseteil 20 nimmt rahmenartig einen Bildschirm 3 auf, der derzeit in der Regel als Flüssigkristallanzeige implementiert wird, prinzipiell aber auch als Plasma-Bildschirm oder in anderer Form ausgeführt sein kann. Links und rechts von dem Bildschirm sind im frontseitigen Gehäuseteil 20 Funktionstastenfelder 4a und 4b angeordnet, die in dem dargestellten Ausführungsbeispiel eine gleiche Anzahl von Funktionstasten 40 enthalten.

Die Bedieneinheit hat, wie bei Computerterminals üblich, eine im betriebsbereiten Zustand schräg zur Frontseite hin geneigte Tastatur 5 mit Tasten 51, 52, die in zwei zueinander geneigten Feldern angeordnet sind. Die Tastatur 5 ist an einer Klappe 50 angeordnet -und mit dieser um eine unterhalb des Bildschirms 3 angeordnete horizontale Achse 53 schwenkbar gelagert. Wie in Fig. 2 auch besonders deutlich zu sehen ist, kann die Tastatur 5 bzw. Schwenkklappe 50 aus der in den Fig. 1 und 2 dargestellten Funktionsstellung heraus in Richtung des Pfeils A vor den Bildschirm 3 zurückgeklappt werden (Fig. 2). In dieser Position wird der besonders gefährdete untere Bildschirmbereich von der Klappenrückseite vollständig abgedeckt, die vorzugsweise aus einem stoßunempfindlichen Kunststoffmaterial besteht.

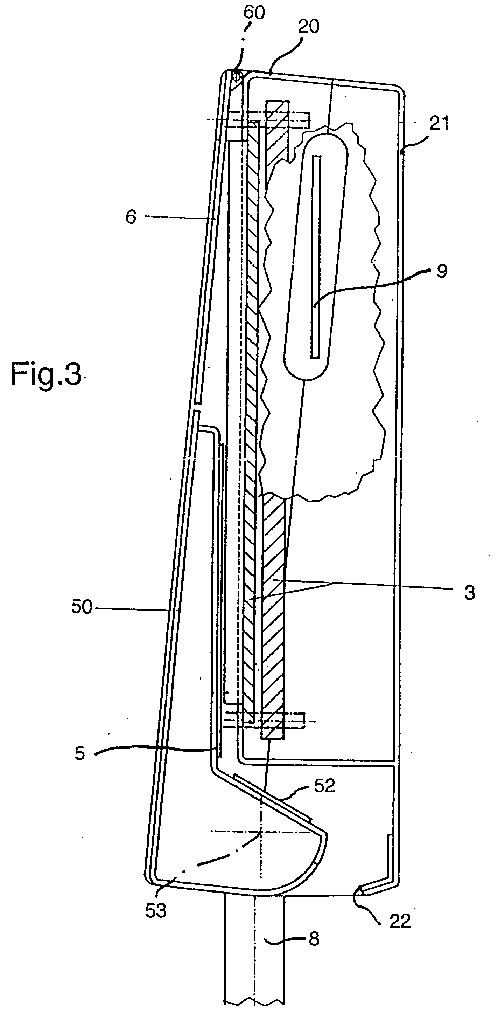

Oberhalb des Bildschirms ist eine zweite Schwenkklappe 6 angeordnet, die um eine ebenfalls horizontale Schwenkachse 60 schwenkbar gelagert ist. Im aufgeklappten Zustand (Fig. 1 und 2) ist die obere Schwenkklappe 6 über den oberen Bildschirmrand hochgeklappt, so daß die Sicht auf den Bildschirm nicht beeinträchtigt ist. Durch Einstellung in einer geeigneten Schwenkposition läßt sich die zweite Schwenkklappe 6 als Blendschutz gegen störende, von oben kommende Beleuchtungsstrahlen verwenden. Sie kann in Richtung des Pfeils B aber auch vollständig eingeklappt werden. In der eingeklappten Position gemäß Fig. 3 bilden die Außenwände der beiden Klappen 5 und 6 eine nahezu geschlossene, in einer Ebene liegende Frontwand, die den Bildschirm 3 schützend überspannt. Die obere Schwenkklappe 6 kann aber auch bei geschlossener unterer Schwenkklappe 5 bzw. 50 hochgeschwenkt sein (Fig. 2) und dadurch den Blick auf einen oberen Bildschirmstreifen freigeben. Dies hat bei nur geringer Beschädigungsgefahr für den Bildschirm 3 den Vorteil, daß der Bedienungsperson über den oberen Bildschirmteil den gerade ablaufenden Maschinenprozeß betreffende Informationen vermittelt werden können. Der obere Bildschirmteil kann außerdem, in einer in der Zeichnung nicht dargestellten Ausführungsform, durch eine klarsichtige Schutzscheibe abgedeckt sein, die auch bei aufgeklappten Klappen 5, 6 in ihrer Position bleiben kann. Die Klappe 6 kann dann entfallen oder als reine Blendschutzvorrichtung verwendet werden.

In der aufgeklappten Stellung kann die Klappe bzw. Tastatur 5 durch einen gehäusefesten Anschlag 22 fixiert sein. In der Seitenwand des Gehäuses ist ein geeigneter Aufnahmeschlitz für einen Massenspeicher 9, beispielsweise eine Programmdiskette, eine Magnetkarte o.dgl. vorgesehen. Leitungsstränge 8 bilden die Signalverbindung zur Maschine und versorgen die Bedieneinheit 1 mit Strom.

Im Rahmen des Erfindungsgedankens sind zahlreiche Abwandlungen möglich: So hat die die Tastatur 5 tragende Schwenkklappe 50 nicht notwendigerweise eine L-förmige Querschnittsform (Fig. 3), sondern kann auch einfach keilförmig und ohne die geneigten Tastenfelder 51 und 52 gestaltet sein. Anstelle der einteiligen Schwenkklappe 50 können auch zwei unabhängig betätigbare Schwenkklappen als Träger für die Tastatur verwendet werden. Vorzugsweise sind dann beide Klappen auf einer horizontalen Schwenkachse 53 angeordnet. Die Schwenkklappe 50 kann auch zur Vergrößerung und Verstärkung ihrer Schutzfunktion vor dem Bildschirm 3 mit einer frontseitigen Jalousie versehen werden. Ferner kann die obere Schwenkklappe 6 auch mit einer Gleitführung versehen sein, die ein Zurückschieben der Schwenkklappe 6 parallel zur Oberseite des Gehäuses 2 ermöglicht.

## Patentansprüche

1. Bedieneinheit (1) für eine Spritzgießmaschine mit einer Tastatur (5) zur Dateneingabe, Funktionstastenfeldern (4a, 4b) zur Steuerung des Funktionsablaufs der Maschine und mit einem Bildschirm (3);
wobei die Tastatur (5) an einer im Bereich unterhalb des Bildschirms (3) schwenkbar gelagerten Klappe (50) befestigt und in unbenutztem Zustand auf den Bildschirm (3) derart umklappbar ist, daß die Klappe (50) und/oder Tastatur (5) mindestens den unteren Bereich des Bildschirms (3) schützend abdeckt; und
wobei wenigstens auf einer Seite des Bildschirms (3) ein Funktionstastenfeld (4a, 4b) in fester Zuordnung zum Bildschirm derart angeordnet ist, daß die Funktionstasten (40) auch bei abgedecktem Bildschirm (3) frei zugänglich und betätigbar sind.

2. Bedieneinheit nach Anspruch 1, dadurch gekennzeichnet, daß im oberen Bereich des Bildschirms (3) eine zweite Schutzklappe (6) schwenkbar angeordnet ist, wobei die Schwenkachsen (53, 60) beider Klappen (50, 6) zueinander parallel verlaufen, und daß die beiden Klappen in ihrer auf den Bildschirm (3) geklappten Stellung (Fig. 3) den Bildschirm im wesentlichen vollständig abdecken.

3. Bedieneinheit nach Anspruch 2, dadurch gekennzeichnet, daß die zweite Klappe (6) in verschiedenen Schwenkstellungen derart einstellbar ist, daß sie als Blendschutzklappe bei der Bedienung des Bildschirms (3) verwendbar ist.

4. Bedieneinheit nach einem der Ansprüche 1 bis 3, dadurch gekennzeichnet, daß zwei Funktionstastenfelder (4a, 4b) symmetrisch zu beiden Seiten des Bildschirms (3) angeordnet sind.

5. Bedieneinheit nach einem der Ansprüche 1 bis 4, dadurch gekennzeichnet, daß jedes Funktionstastenfeld (4a, 4b) gegenüber der eingeklappten ersten und/oder zweiten Klappe (50, 6) zur Frontseite hin vorspringt.

## Claims

1. Control unit (1) for an injection moulding machine including a keyboard (5) for data input, functional key sets (4a, 4b) for controlling the operating sequence of the machine and including a display screen (3);
whereby the keyboard (5) is secured to a flap (50), which is pivotally mounted in the region below the display screen (3), and may be swung, in the unused state, towards the display screen (3) such that the flap (50) and/or keyboard (5) protectively covers at least the lower region of the display screen (3); and
whereby on at least one side of the display screen (3) a functional key pad (4a, 4b) is so arranged in fixed association with the display screen that the functional keys (40) are freely accessible and operable, even when the display screen (3) is covered.

2. Control unit as claimed in Claim 1, characterised in that a second protective flap (6) is pivotally arranged in the upper region of the display screen (3), the pivotal axes (53, 60) of the two flaps (50, 6) extending parallel to one another, and that the two flaps substantially completely cover the display screen, when they are in the position in which they are swung towards the display screen (3) (Fig. 3).

3. Control unit as claimed in Claim 2, characterised in that the second flap (6) is adjustable into different pivotal positions such that it is usable as an antiglare flap when operating the display screen (3).

4. Control unit as claimed in one of Claims 1 to 3, characterised in that the two functional key pads (4a, 4b) are symmetrically arranged on the two sides of the display screen (3).

5. Control unit as claimed in one of Claims 1 to 4, characterised in that each functional key pad (4a, 4b) projects forwardly towards the front side beyond the first and/or second flap (50, 6), when swung in.

## Revendications

1. Bloc de commande (1) pour machine de moulage par injection, comportant un clavier (5) pour l'entrée de données, des panneaux de touches de fonctions (4a, 4b) pour la commande de la séquence de fonctionnement de la machine, et un écran (3),
le clavier (5) étant fixé sur un volet (50) monté basculant dans la zone située au-dessous de l'écran (3), et pouvant, lorsqu'il n'est pas utilisé, être rabattu sur l'écran (3) de façon telle que le volet (50) et/ou le clavier (5) couvre aux fins de protection au moins la partie inférieure de l'écran (3), et
au moins sur un côté de l'écran (3), un panneau de touches de fonctions (4a, 4b) étant placé, adjoint de manière fixe à l'écran (3), de façon telle que les touches de fonctions (40) soient librement accessibles et actionnables même lorsque l'écran (3) est couvert.

2. Bloc de commande selon la revendication 1, caractérisé par le fait que dans la partie supérieure de l'écran (3) est monté basculant un deuxième volet de protection (6), les axes de basculement (53, 60) des deux volets (50, 6) étant parallèles, et que les deux volets, en position rabattue sur l'écran (3) (fig. 3), couvrent pratiquement entièrement celui-ci.

3. Bloc de commande selon la revendication 2, caractérisé par le fait que le deuxième volet (6) peut être mis dans différentes positions basculées de façon telle qu'il soit utilisable comme volet anti-éblouissement lors de l'utilisation de l'écran (3).

4. Bloc de commande selon l'une des revendications 1 à 3, caractérisé par le fait que deux panneaux de touches de fonctions (4a, 4b) sont placés symétriquement de part et d'autre de l'écran (3).

5. Bloc de commande selon l'une des revendications 1 à 4, caractérisé par le fait que chaque panneau de touches de fonctions (4a, 4b) fait saillie vers le côté avant par rapport au premier et/ou au deuxième volet (50, 6) rabattu.
